# EUROPÄISCHE PATENTSCHRIFT

(11) **EP 1 921 963 B1**
(45) Veröffentlichungstag und Bekanntmachung des Hinweises auf die Patenterteilung: **06.05.2009**
(21) Anmeldenummer: 06776303.7
(22) Anmeldetag: 20.07.2006
(51) Int. Cl.: A47J 43/10

(54) **VORRICHTUNG ZUM RÜHREN, MISCHEN UND/ODER ZERKLEINERN VON LEBENSMITTELN**
DEVICE FOR STIRRING, MIXING, AND/OR GRINDING FOOD PRODUCTS
DISPOSITIF SERVANT A AGITER, A MELANGER ET/OU A BROYER DES ALIMENTS

(30) Priorität: 26.08.2005 DE 102005040729
(43) Veröffentlichungstag der Anmeldung: 21.05.2008
(73) Patentinhaber: LEIFHEIT AG, 56377 Nassau (DE)
(72) Erfinder: SCHRAMM, Benjamin, 65558 Eppenrod (DE); KLOTZ, Markus, 56357 Hainau (DE)
(74) Vertreter: Hoffmann, Jürgen
(86) Internationale Anmeldenummer: PCT/EP2006/007136
(87) Internationale Veröffentlichungsnummer: WO 2007/022839

(56) Entgegenhaltungen:
- EP-A1- 1 449 472
- US-A1- 2002 153 440

## Beschreibung

Die vorliegende Erfindung betrifft eine Vorrichtung zum Rühren, Mischen und/oder Zerkleinern von Lebensmitteln, mit einem vorzugsweise zwei Gehäuseteile umfassenden, einen Arbeitsraum bildenden Gehäuse und einem in dem Arbeitsraum angeordneten Werk, welches eine mit Werkzeugen ausgestattete Welle umfasst, wobei das Werk durch eine Drehbewegung der Gehäuseteile relativ zueinander betätigbar und dadurch die Welle um deren Längsachse drehbar ist.

Eine Vorrichtung der gattungsbildenden Art ist beispielsweise aus der EP 1 449 472 A1 bekannt. Im Konkreten handelt es sich dabei um ein handbetreibbares Gerät zum Zerkleinern von Lebensmitteln, welches bedingt auch zum Rühren und/oder Mischen der Lebensmittel verwendbar ist. Eine drehbare Kappe dient als Antriebsteil für eine Messer tragende Welle, die über ein Getriebe zur Drehung um die Drehachse der Kappe angetrieben wird. Die bekannte Vorrichtung ist jedoch in Bezug auf die Effizienz des Schneidens nachteilig, da die Messer in einer vorgegebenen Position der Welle lediglich um eine Achse drehen. Insbesondere leichtes und klebriges Schnittgut wird von den Messern nur unzureichend erfasst. Misch- und Rührergebnisse sind mit der bekannten Vorrichtung sind aus dem voranstehend genannten Grunde ebenfalls unzureichend. Außerdem ist die bekannte. Vorrichtung nicht zuletzt aufgrund des dort vorgesehenen Getriebes aufwendig in der Konstruktion und Montage.

Der vorliegenden Erfindung liegt daher die Aufgabe zugrunde, die gattungsbildende Vorrichtung derart auszugestalten und weiterzubilden, dass sie sich universell zum Rühren, Mischen und/oder Zerkleinern von Lebensmitteln eignet, und zwar bei hohem Wirkungsgrad und einfachster Konstruktion.

Erfindungsgemäß wird die voranstehende Aufgabe durch eine Vorrichtung zum Rühren, Mischen und/oder Zerkleinern von Lebensmitteln mit den Merkmalen des Patentanspruches 1 gelöst. Danach ist die gattungsbildende Vorrichtung dadurch gekennzeichnet, dass sich die Welle im Wesentlichen quer zur Drehachse der Gehäuseteile durch den Arbeitsraum hindurch erstreckt.

Erfindungsgemäß ist erkannt worden, dass es nicht zuletzt aufgrund der Schwerkraft problematisch ist, wenn die die Werkzeuge tragende Welle im Betrieb der Vorrichtung vertikal angeordnet ist. Im Falle eines festen Schnittguts kann dieses bei vertikaler Welle und davon orthogonal abragenden Werkzeugen, wie dies im Stand der Technik aus der EP 1 449 472 A1 vorgesehen ist, nur unzureichend erfasst werden. Die Effizienz einer solchen Vorrichtung ist daher stark beeinträchtigt.

In weiter erfindungsgemäßer Weise ist erkannt worden, dass man diesen Nachteil dadurch kompensieren kann, dass sich die Welle im Wesentlichen quer zur Drehachse der Gehäuseteile durch den Arbeitsraum hindurch erstreckt. Die an der Welle angebrachten Werkzeuge greifen in den Arbeitsraum und wirken auf das zu zerkleinernde Gut entgegen der Schwerkraft, so dass eine effiziente Verwirbelung des Guts im Arbeitsraum stattfindet. Dadurch werden die Lebensmittel regelrecht durch den Arbeitsraum gewirbelt, und zwar entgegen der Schwerkraft, so dass ein ständiges Rühren, Mischen und/oder Zerkleinern des Guts stattfindet. Bereits insoweit ist eine äußerst effiziente Vorrichtung geschaffen.

Im Konkreten ist es von Vorteil, wenn das Gehäuse zwei gegeneinander drehbare Gehäusehälften umfasst, wobei sich die Welle vorzugsweise im Kontaktbereich der Gehäusehälften quer zur Drehachse der Gehäusehälften durch den Arbeitsraum hindurch erstreckt. Die Welle erstreckt sich vorzugsweise diagonal durch den Arbeitsraum, und zwar orthogonal zur Drehachse der Gehäusehälften.

In besonders vorteilhafter Weise, insbesondere in Bezug auf die Effizienz der Werkzeuge, ist das Werk und somit die Welle derart angetrieben, dass sich die Welle beim Drehen der Gehäusehälften sowohl um ihre Drehachse als auch um die Drehachse der Gehäusehälften dreht. Mit anderen Worten dreht sich die Welle mm einen um ihre Drehachse und bewegt sich die Welle insgesamt - mit den daran befestigten Werkzeugen - um die Drehachse der Gehäusehälften. Die beiden sich überlagernden Bewegungen verbessern abermals die Wirksamkeit der Vorrichtung.

In Bezug auf die Geometrie des Gehäuses ist es sowohl in Bezug auf den Betrieb als auch in Bezug auf das Reinigen von Vorteil, wenn die Gehäusehälften in etwa halbkugelförmig ausgebildet sind. Entsprechend ist der Arbeitsraum in etwa kugelförmig ausgebildet.

Zum Beladen und Entladen werden die Gehäusehälften voneinander getrennt. Zum Schließen des Arbeitsraums werden die beiden Gehäusehälften miteinander verbunden, und zwar in weiter vorteilhafter Weise über einen flanschartigen Bereich, der zur gegenseitigen Anlage der beiden Gehäusehälften dient. Der flanschartige Bereich der einen Gehäusehälfte greift dabei in den flanschartigen Bereich der anderen Gehäusehälfte oder die beiden flanschartigen Bereiche übergreifen sich gegenseitig zumindest teilweise. Im Konkreten ist es denkbar, dass der flanschartige Bereich der einen Gehäusehälfte einen vorstehenden Gleitring in Form einer Schulter oder dergleichen aufweist. Der flanschartige Bereich der anderen Gehäusehälfte hat einen entsprechend zurückgesetzten Absatz mit einer Gleitfläche für den Gleitring bzw. für die Schulter, wobei es durchaus auch denkbar ist, dass über die hier in Rede stehenden Bauteile eine lösbare Verrastung stattfindet.

In konstruktiver Hinsicht ist es des Weiteren von Vorteil, wenn der zuvor erwähnte Gleitring für die Welle um deren Durchmesser unterbrochen ist, so dass sich die Welle durch diese Gleitring hindurch nach außen erstrecken kann. Dies ist besonders vorteilhaft günstig in Bezug auf die Lagerung der Welle.

Der flanschartige Bereich der einen Gehäusehälfte umfasst in weiter vorteilhafter Weise ein Betätigungsorgan als Teil des der anderen Gehäusehälfte zugeordneten Werks. Im Konkreten kann es sich bei dem Betätigungsorgan um einen Zahnkranz handeln. Die das Werk umfassende andere Gehäusehälfte umfasst in ihrem flanschartigen Bereich die sich diagonal erstreckende Welle, die mit zumindest einem vorzugsweise endseitigen Zahnrad mit dem Zahnkranz der anderen Gehäusehälfte kämmt. Unterschiedliche Wirkverbindungen sind denkbar, wobei die Wirkverbindung zwischen Zahnkranz und Zahnrad lediglich beispielhaft genannt ist.

Im Rahmen der zuvor genannten Ausgestaltung ist es jedenfalls von Vorteil, wenn die Welle entweder auf einer Seite oder beidseits, vorzugsweise endseitig, ein Zahnrad trägt. Im Falle der Vorkehrung von zwei endseitigen Zahnrädern würde die Welle beidseitig angetrieben werden, was für eine erhöhte Stabilität des Antriebs sorgt.

Zur sicheren Lagerung der Welle kann diese zumindest an einem Wellenende mit einer vorzugsweise kreisförmigen Führung, vorzugsweise in Form einer endseitigen Führungsscheibe, ausgestattet sein. Es ist ohne weiteres auch denkbar, dass entsprechende Führungen an beiden Enden der Welle vorgesehen sind, insbesondere dann, wenn an beiden Enden entsprechende Zahnräder zum Antrieb wirken.

Eine Welle mit den zuvor erörterten konstruktiven Merkmalen könnte am Rand des flanschartigen Bereichs, vorzugsweise in einem dort ausgebildeten Lagerbereich, gelagert und gehalten sein. Dieser Lagerbereich sollte durch das Gehäuse nach außen gekapselt sein, wobei es sich anbietet, dass der Lagerbereich in einer beidseitigen Erweiterung des Gehäuses liegt. Diese Erweiterung des Gehäuses hat gleichzeitig den Vorteil, dass sich die entsprechende Gehäusehälfte, insbesondere die obere Gehäusehälfte, aufgrund der beiden Erweiterungen des Gehäuses besser greifen lässt. So könnten die Lagerbereiche auf der Oberfläche des oberen Gehäuseteils als Griffbereiche mit entsprechender Oberfläche ausgeführt sein.

In Bezug auf die Werkzeuge sei angemerkt, dass es sich hierbei um jedwede Werkzeuge zum Rühren, Mischen und/oder Zerkleinern von Lebensmitteln handeln kann. So können als Werkzeuge beispielsweise Messer mit vorzugsweise beidseitigen oder umlaufenden Schneiden vorgesehen sein, so dass die Messer in beiden Drehrichtungen wirken. Die Messer lassen sich symmetrisch oder asymmetrisch um die Welle herum anordnen, wobei die Welle über ihre Länge hinweg und um ihren Umfang herum mit entsprechenden Messern ausgestattet sein kann. Im Rahmen einer einfachen Ausgestaltung könnten drei Messer auf der Welle sitzen, die in unterschiedlichen Richtungen von der Welle abragen.

In vorteilhafter Weise sind die Messer derart dimensioniert und angeordnet, dass sie mit nur geringem Abstand zu der Innenwandung des Arbeitsraums mit der Welle drehen. Auch dadurch lässt sich die Wirksamkeit der Vorrichtung positiv beeinflussen.

Alternativ oder zusätzlich ist es möglich, dass als Werkzeug Schneidräder vorgesehen sind. Schneidräder haben den besonderen Vorteil, dass sie sich auf der Innenwandung der jeweiligen Gehäusehälften abrollen lassen und so eine Schneidwirkung gegenüber der Innenwandung haben. Die Schneidräder können symmetrisch oder asymmetrisch, zentrisch oder exzentrisch an der Welle bzw. um die Welle herum angeordnet sein. In vorteilhafter Weise sind die Schneidräder derart dimensioniert und angeordnet, dass sie mit nur geringem Abstand zu der Innenwandung des Arbeitsraumes laufen oder dass sie auf der Innenwandung des Arbeitsraumes laufen und somit die Innenwandung regelrecht als Schneidunterlage bzw. als Gegenlager nutzen.

Im Rahmen einer weiteren Alternative ist es denkbar, dass im Bereich zwischen den Gehäusehälften ein den Arbeitsraum teilender Boden ausgebildet ist, durch den die Schneidräder oder Schneidmesser, vorzugsweise in Schlitzen, drehen. Durch diese Maßnahme lassen sich zwei unterschiedliche Arbeitsräume schaffen, so dass es möglich ist, gleichzeitig unterschiedliches Schnittgut zu bearbeiten. Auch lässt sich dadurch der Arbeitraum verkleinern, so dass gerade bei kleinen Mengen die Wirksamkeit der Vorrichtung begünstigt ist.

Sofern der den Arbeitsraum teilende Boden vorgesehen ist, ist es von weiterem Vorteil, diesen einer der beiden Gehäusehälften zuzuordnen. Auch ist es möglich, dass in dem Boden eine Aufnahme für die Welle vorgesehen ist, so dass diese gegenüber der anderen Hälfte des Arbeitsraums - durch den Boden - gekapselt ist. Mit anderen Worten könnte die Welle derart gelagert, geführt oder lediglich angeordnet sein, dass der Boden die Welle zu einer der Gehäusehälften hin zumindest weitgehend überdeckt.

Besonders raffiniert ist eine Ausführung, wonach die Schneidräder pendelnd an der Welle angelenkt sind, wobei sich die Schneidräder unter dem Einfluss der beim Drehen der Welle auftretenden Zentrifugalkräfte zur Innenwandung hin bewegen.
Eine solche Ausgestaltung könnte entsprechende Anlenkstützen an der Welle aufweisen, die wiederum über ein Gelenk eine Gabel für die Schneidräder tragen. Die Anordnung ist so auszulegen, dass sich die Schneidräder beim Drehen der Welle nach außen zur Innenwandung des Gehäuses hin bewegen, so dass sie ihre Schneidwirkung gegen die Innenwandung entfalten. Im Konkreten könnten die Schneidräder beim Drehen auf bzw. an der Innenwandung des Arbeitsraumes laufen. Die Vorkehrung von zwei gegenüberliegend angeordneten Schneidrädern dürfte bereits ausreichen, zumal die Schneidräder um ihre eigene Drehachse, um die Drehachse der Welle und gemeinsam mit der Welle um die Drehachse der Gehäusehälften drehen. Eine optimale Ausnutzung des Arbeitsraums ist dadurch gegeben.

Des Weiteren ist es von Vorteil, wenn die Werkzeuge, Drähte, Drahtschlaufen oder dergleichen im Sinne eines Schneebesens umfassen. Die Drähte, Drahtschlaufen oder dergleichen würden sich dann entlang des Umfangs der Welle von dieser weg und wieder zu dieser hin erstrecken, wobei die Drähte, Drahtschlaufen oder dergleichen vorzugsweise als kunststoffbeschichtete Metalldrähte ausgeführt sind.

Mit den voranstehend genannten Werkzeugen lassen sich Lebensmittel wirksam zerkleinern oder lassen sich feste wie auch flüssige Lebensmittel rühren und/oder mischen. Nachteilig ist jedoch, dass zerkleinertes Gut, insbesondere wenn es feucht ist, gerne an der Innenwandung des Arbeitsraumes haften bleibt. Insoweit ist es von besonderem Vorteil, wenn eine Abstreifeinrichtung zum Abstreifen bzw. Lösen des bearbeiteten Guts von der Innenwandung des Arbeitsraums vorgesehen ist. Die Abstreifeinrichtung ist in vorteilhafter Weise der Welle zugeordnet, wobei sich bei drehender Welle ein oder mehrere Abstreifer entlang der Innenwandung des Arbeitsraumes bewegen. Im Konkreten können die Abstreifer als mit der Welle verbundene, vorzugsweise elastische Schleifbügel ausgeführt sein, die sich beim Drehen der Welle entlang der Innenwandung des Arbeitsraums bewegen und somit das Gut bei jeder Umdrehung von der Innenwandung streifen.

In Bezug auf die Ausstattung mit den zuvor erörterten Werkzeugen sei angemerkt, dass es durchaus denkbar ist, für ein und dieselbe Vorrichtung Wellen mit unterschiedlichen Werkzeugen zur Verfügung zu stellen. Ebenso ist es denkbar, eine Welle mit unterschiedlichen Werkzeugen auszustatten, so dass eine kombinierte Bearbeitung bzw. Beeinflussung des Guts stattfinden kann.

In Bezug auf das Gehäuse und die das Gehäuse bildenden Gehäusehälften sei angemerkt, dass es von besonderem Vorteil ist, wenn der einen - unteren - Gehäusehälfte ein integraler oder dort befestigter Sockel zum Positionieren auf einer ebenen Unterlage zugeordnet ist. So könnte die untere Gehäusehälfte als Standteil ausgeführt sein, wobei es dabei wiederum von Vorteil ist, wenn der Sockel zumindest partiell mit einer rutschfesten Beschichtung versehen ist. Durch diese Maßnahme lässt sich das untere Gehäuseteil fest auf einem Tisch positionieren, während die Drehbewegung über das obere Gehäuseteil ausgeführt wird.

Der anderen Gehäusehälfte, in diesem Falle der oberen Gehäusehälfte, könnte dann entsprechend das Werk zugeordnet sein, so dass nach dem Arbeitsvorgang das die obere Gehäusehälfte gemeinsam mit dem Werk entfernt wird, wodurch ein Entleeren des bearbeiteten Guts aus der unteren Gehäusehälfte mühelos möglich ist.

Zur Kontrolle des Bearbeitungsergebnisses ist es denkbar, die obere Gehäusehälfte mit Sichtfenstern zum Einblick in den Arbeitraum auszustatten, wobei diese Sichtfenster gleichzeitig eine gestalterische Funktion haben. Alternativ dazu könnte die obere Gehäusehälfte aus einem zumindest weitgehend durchsichtigen Material, vorzugsweise aus durchsichtigem Kunststoff, hergestellt sein, so dass insgesamt ein Einblick möglich ist. Gleiches gilt selbstverständlich auch für die untere Gehäusehälfte:

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung von Ausführungsbeispielen der erfindungsgemäßen Vorrichtung anhand der Zeichnung zu verweisen. In Verbindung mit der Erläuterung der bevorzugten Ausführungsbeispiele der erfindungsgemäßen Vorrichtung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel einer erfindungsgemäßen Vorrichtung im geschlossenen Zustand,
- Fig. 2: in einer schematischen Ansicht den Gegenstand aus Fig. 1 im geöffneten Zustand,
- Fig. 3: in einer schematischen Ansicht die untere Gehäusehälfte mit einer aufgelegten Welle, die Schneidräder trägt,
- Fig. 4: in einer schematischen Ansicht die untere Gehäusehälfte mit einer aufgelegte Welle, die Schneidräder trägt, wobei ein Boden zur Unterteilung des Arbeitraumes vorgesehen ist,
- Fig. 5: in einer schematischen Ansicht die obere Gehäusehälfte der erfindungsgemäßen Vorrichtung mit dem Werk aus Fig. 4,
- Fig. 6: in einer schematischen Ansicht die untere Gehäusehälfte mit einer aufgelegten Welle, wobei die Welle schwenkbare Schneidräder trägt,
- Fig.7: in einer schematischen Ansicht die obere Gehäusehälfte der erfindungsgemäßen Vorrichtung mit dem Werk aus Fig. 6,
- Fig. 8: in einer schematischen Detailansicht eine Ausgestaltungsmöglichkeit der Anlenkung der schwenkbaren Schneidräder gemäß den Fig. 6 und 7 und
- Fig. 9: in einer schematischen Ansicht die untere Gehäusehälfte mit einer aufgelegten Welle, die Werkzeuge im Sinne eines Schneebesens umfasst.

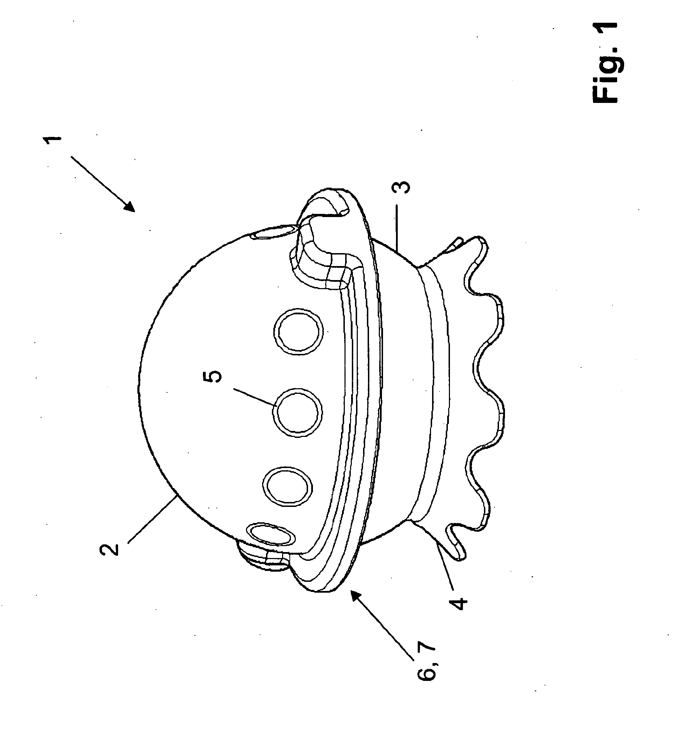

Fig. 1 zeigt in einer schematischen Ansicht ein Ausführungsbeispiel einer erfindungsgemäßen Vorrichtung, die sich zum Rühren, Mischen und/oder Zerkleinern von Lebensmitteln eignet, und zwar je nach dem dort vorgesehenen Werkzeug. In Fig. 1 ist angedeutet, dass das Gehäuse 1 im Wesentlichen aus einem oberen Gehäuseteil 2 und einem unteren Gehäuseteil 3 besteht. Das obere Gehäuseteil 2 ist gegenüber dem unteren Gehäuseteil 3 drehbar. Damit eine Positionierung auf einem Tisch oder dergleichen möglich ist, ist das untere Gehäuseteil 3 mit einem Sockel 4 ausgestattet.

Fig. 1 lässt des Weiteren erkennen, dass das obere Gehäuseteil 2 mit Sichtfenstern 5 ausgestattet ist, die einen Einblick in den Arbeitsraum gewähren.

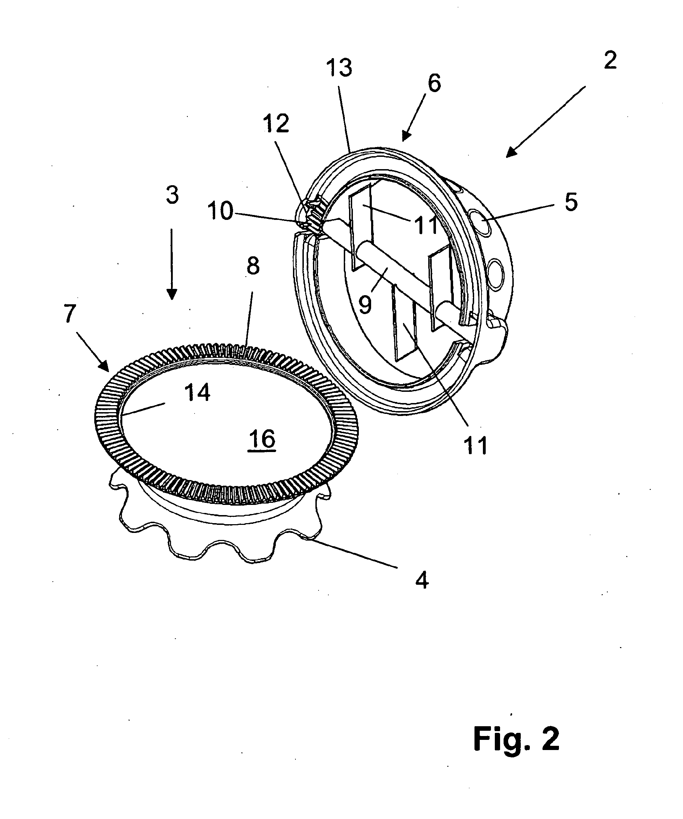

Fig. 2 zeigt die Vorrichtung aus Fig. 1 im geöffneten Zustand. Dabei ist erkennbar, dass die beiden Gehäuseteile bzw. Gehäusehälften 2, 3 flanschartige Bereiche 6, 7 aufweisen, die im geschlossenen Zustand zur gegenseitigen Anlage bzw. zum Verbinden der beiden Gehäusehälfte 2, 3 dienen.

Fig. 2 lässt des Weiteren erkennen, dass der unteren Gehäusehälfte 3 ein Zahnkranz 8 als Betätigungsorgan zugeordnet ist. Der oberen Gehäusehälfte 2 ist eine Werkzeuge tragende Welle 9 zugeordnet, die endseitig mit einem Zahnrad 10 ausgestattet ist. Im geschlossenen Zustand kämmt das Zahnrad 10 mit dem Zahnkranz 8.

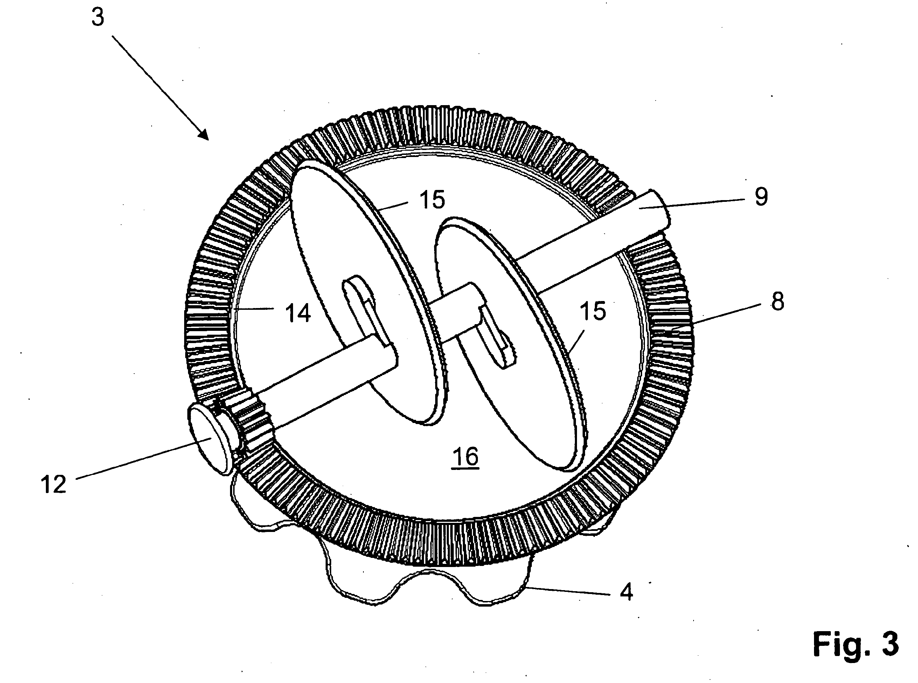

Bei dem in Fig. 2 gezeigten Ausführungsbeispiel sind als Werkzeuge drei Messer 11 vorgesehen die dort lediglich schematisch gezeigt sind. Des Weiteren weist die Welle 9 an deren Ende eine Führungsscheibe 12 auf, die sich der Darstellung in Fig. 3 bei dem dortigen Ausführungsbeispiel besonders gut erkennen lässt.

Fig. 2 lässt des Weiteren auch erkennen, dass die obere Gehäusehälfte 2 einen vorstehenden Gleitring 13 umfasst, der im Bereich der Welle 9 unterbrochen ist. Der Gleitring 13 dient zum Einstecken in einen zurückgesetzten Absatz 14 der unteren Gehäusehälfte 3, wobei auch eine umgekehrte Anordnung denkbar ist.

Bei dem in Fig. 3 ausgeführt Ausführungsbeispiel sind als Werkzeuge Schneidräder 15 vorgesehen, die sowohl winkelversetzt zueinander als auch exzentrisch auf der Welle 9 angeordnet sind.

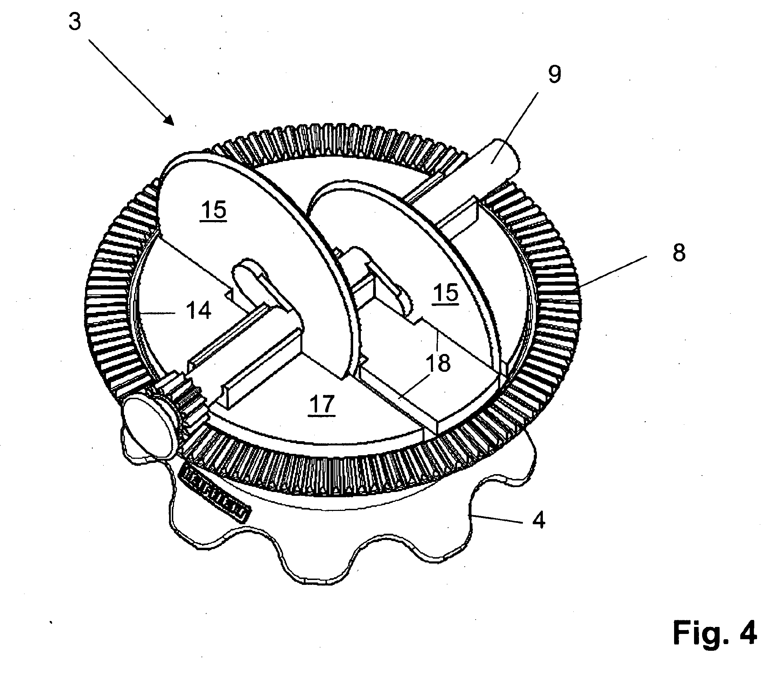

Bei dem in Fig. 4 gezeigten Ausführungsbeispiel ist ein den Arbeitsraum 16 teilender Boden 17 vorgesehen, wobei die Schneidräder 15 in Schlitzen 18 des Bodens 17 laufen.

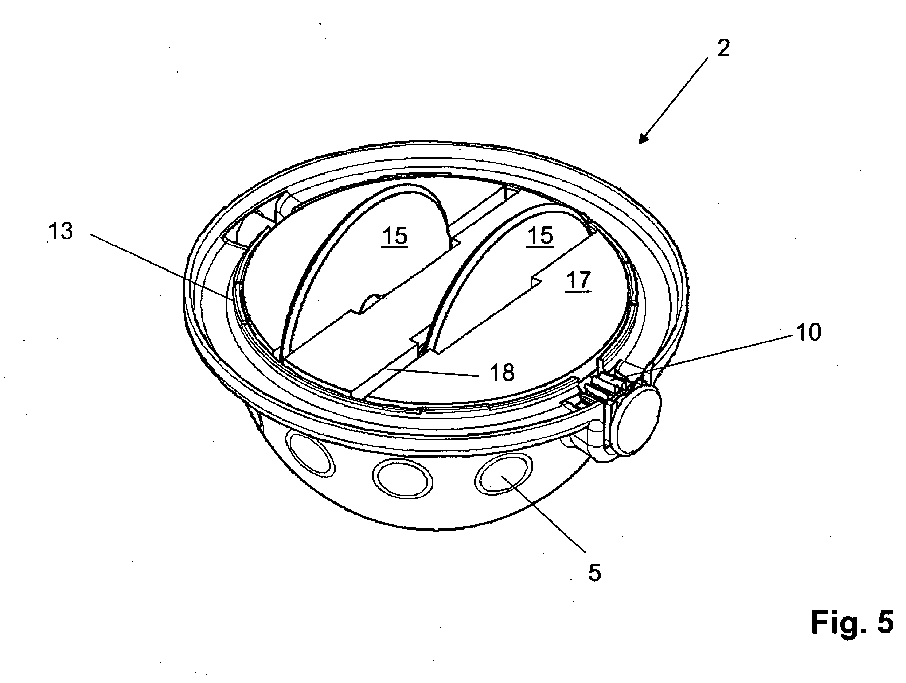

Fig. 5 zeigt die Anordnung aus Fig. 4 in Bezug auf die obere Gehäusehälfte 2, wobei Fig. 5 erkennen lässt, dass der Boden 17 die Welle 9 in Bezug auf den der unteren Gehäusehälfte 3 zugeordneten Arbeitsraum 16 komplett abdeckt. Letztendlich ist der Arbeitsraum 16 durch den Boden 17 unterteilt.

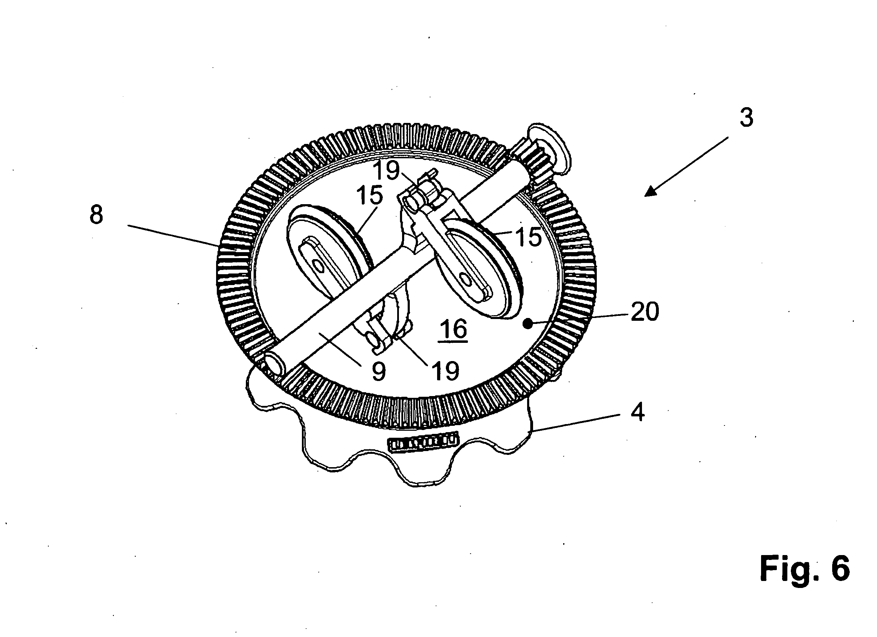

Fig. 6 zeigt im Rahmen einer weiteren Alternative die untere Gehäusehälfte 3 mit dort aufgelegter Welle 9, die als Werkzeug ebenfalls zwei Schneidräder 15 umfasst, die jedoch über eine Gelenkanordnung 19 schwenkbar sind, die sich nämlich aufgrund der beim Drehen auftretenden Zentrifugalkräfte zur Innenwandung 20 des Arbeitsraums 16 hin bewegen.

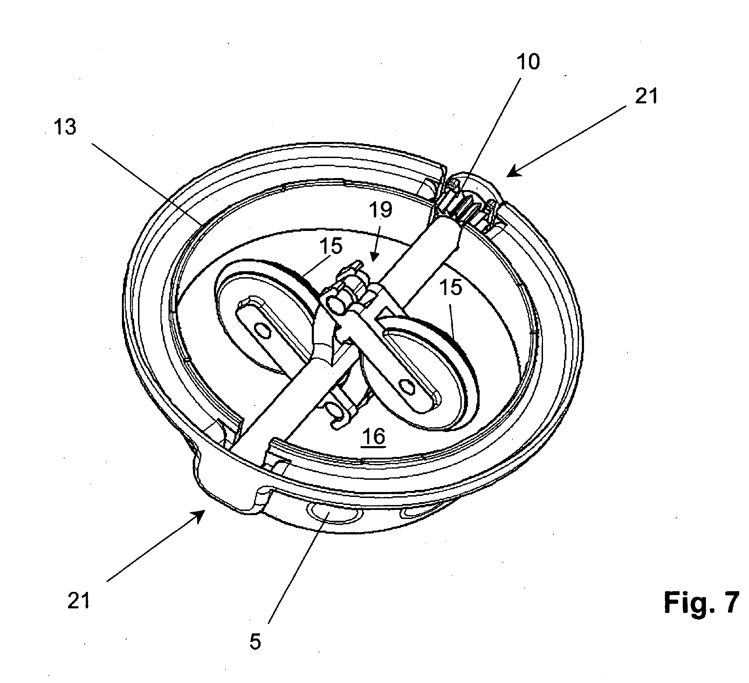

Fig. 7 zeigt die Anordnung aus Fig. 6 in Bezug auf die obere Gehäusehälfte 2, wobei die die Schneidräder 15 tragende Welle 9 in die Lagerbereiche 21 der oberen Gehäusehälfte 2 eingesetzt ist.

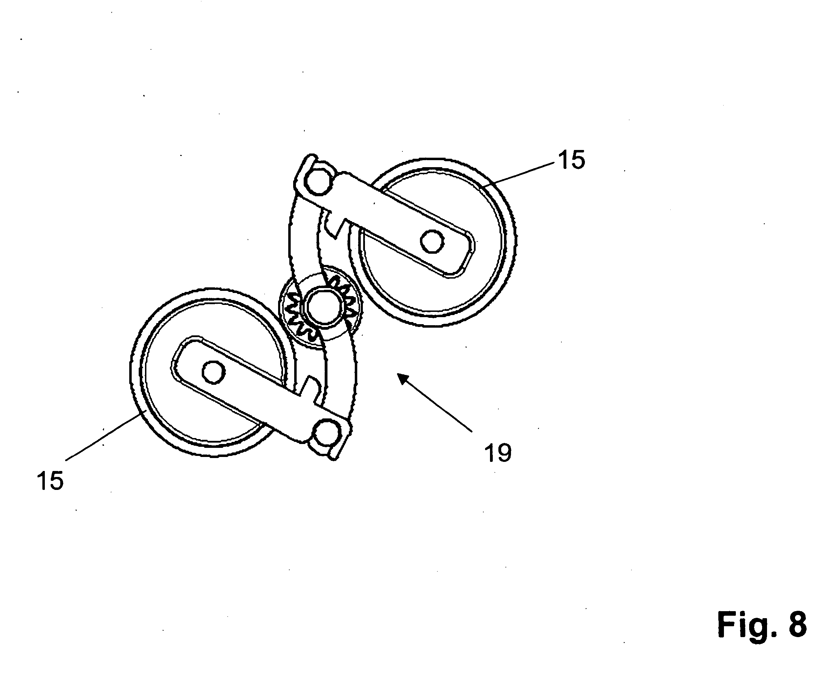

Fig. 8 zeigt im Detail den die beiden Schneidräder 15 tragenden Schwenkmechanismus bzw. die dazu dienende Gelenkanordnung 19.

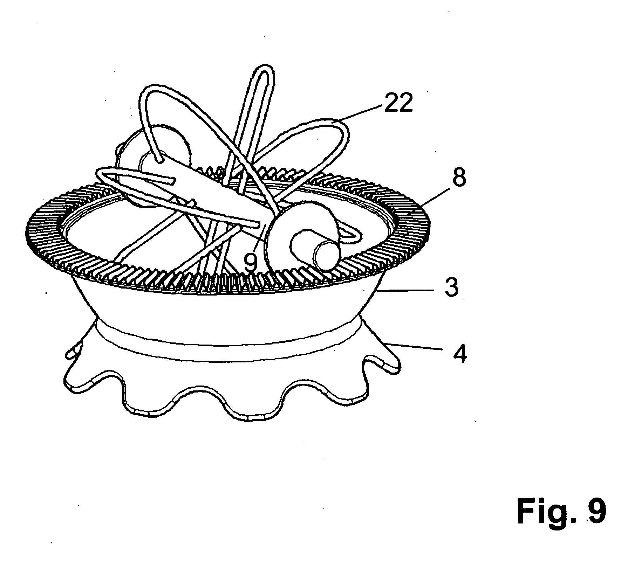

Fig. 9 zeigt ein weiteres Ausführungsbeispiel einer erfindungsgemäßen Vorrichtung, wobei dort auf die untere Gehäusehälfte 3 eine Welle 9 aufgelegt ist, die Drahtschlaufen 22 im Sinne eines Schneebesens umfasst. Eine entsprechend ausgestattete Vorrichtung eignet sich besonders gut zum Rühren und Mischen von Lebensmitteln, insbesondere auch von flüssigen Lebensmitteln.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

## Patentansprüche

1. Vorrichtung zum Rühren, Mischen und/oder Zerkleinern von Lebensmitteln, mit einem vorzugsweise zwei Gehäuseteile (2, 3) umfassenden, einen Arbeitsraum (16) bildenden Gehäuse (1) und einem in dem Arbeitsraum (16) angeordneten Werk, welches eine mit Werkzeugen ausgestattete Welle (9) umfasst, wobei das Werk durch eine Drehbewegung der Gehäuseteile (2, 3) relativ zueinander betätigbar und **dadurch** die Welle (9) um deren Längsachse drehbar ist,
**dadurch gekennzeichnet, dass** sich die Welle (9) im Wesentlichen quer zur Drehachse der Gehäuseteile (2, 3) durch den Arbeitsraum (16) hindurch erstreckt.

2. Vorrichtung nach Anspruch 1, **dadurch gekennzeichnet, dass** das Gehäuse (1) zwei gegeneinander drehbare Gehäusehälften (2, 3) umfasst und dass sich die Welle (9) vorzugsweise im Kontaktbereich der Gehäusehälften (2, 3) quer zur Drehachse der Gehäusehälften (2, 3) durch den Arbeitsraum (16) hindurch erstreckt.

3. Vorrichtung nach Anspruch 1 oder 2, **dadurch gekennzeichnet, dass** sich die Welle (9) diagonal durch den Arbeitsraum (16) erstreckt.

4. Vorrichtung nach Anspruch 3, **dadurch gekennzeichnet, dass** sich die Welle (9) orthogonal zur Drehachse der Gehäusehälften (2, 3) durch den Arbeitsraum (16) erstreckt.

5. Vorrichtung nach einem der Ansprüche 1 bis 4, **dadurch gekennzeichnet, dass** das Werk und somit die Welle (9) derart angetrieben ist, dass sich die Welle (9) beim Drehen der Gehäusehälften (2, 3) sowohl um ihre Drehachse als auch um die Drehachse der Gehäusehälften (2, 3) bewegt.

6. Vorrichtung nach einem der Ansprüche 1 bis 5, **dadurch gekennzeichnet, dass** die Gehäusehälften (2, 3) in etwa halbkugelförmig ausgebildet sind.

7. Vorrichtung nach Anspruch 6, **dadurch gekennzeichnet, dass** der Arbeitsraum (16) in etwa kugelförmig ausgebildet ist.

8. Vorrichtung nach einem der Ansprüche 1 bis 7, **dadurch gekennzeichnet, dass** die Gehäusehälften (2, 3) über einen flanschartigen Bereich (6, 7) zur gegenseitigen Anlage kommen.

9. Vorrichtung nach Anspruch 8, **dadurch gekennzeichnet, dass** der flanschartigen Bereich (6 oder 7) der einen Gehäusehälfte (2 oder 3) in den flanschartigen Bereich (6 oder 7) der anderen Gehäusehälfte (2 oder 3) greift oder dass sich die beiden flanschartigen Bereiche (6 oder 7) zumindest teilweise übergreifen.

10. Vorrichtung nach Anspruch 8 oder 9, **dadurch gekennzeichnet, dass** der flanschartige Bereich (6 oder 7) der einen Gehäusehälfte (2 oder 3) einen vorstehenden Gleitring (13) und der flanschartige Bereich (6 oder 7) der anderen Gehäusehälfte (2 oder 3) einen zurückgesetzten Absatz (14) mit einer Gleitfläche für den Gleitring (13) aufweist.

11. Vorrichtung nach Anspruch 10, **dadurch gekennzeichnet, dass** der Gleitring (13) für die Welle (9) um deren Durchmesser unterbrochen ist.

12. Vorrichtung nach einem der Ansprüche 8 bis 11, **dadurch gekennzeichnet, dass** der flanschartige Bereich (6 oder 7) der einen Gehäusehälfte (2 oder 3) ein Betätigungsorgan als Teil des der anderen Gehäusehälfte (2 oder 3) zugeordneten Werks umfasst.

13. Vorrichtung nach Anspruch 12, **dadurch gekennzeichnet, dass** das Betätigungsorgan als Zahnkranz (8) ausgeführt ist.

14. Vorrichtung nach Anspruch 13, **dadurch gekennzeichnet, dass** die das Werk umfassende andere Gehäusehälfte (2 oder 3) in dem flanschartigen Bereich (6 oder 7) die sich diagonal erstreckende Welle (9) trägt, die mit zumindest einem vorzugsweise endseitigen Zahnrad (10) mit dem Zahnkranz (8) kämmt.

15. Vorrichtung nach Anspruch 14, **dadurch gekennzeichnet, dass** die Welle (9) beidseits, vorzugsweise endseitig, ein Zahnrad (10) zum beidseitigen Antrieb aufweist.

16. Vorrichtung nach einem der Ansprüche 8 bis 15, **dadurch gekennzeichnet, dass** die Welle (9) zumindest an einem Wellenende mit einer vorzugsweise kreisförmige Führung, vorzugsweise in Form einer endseitigen Führungsscheibe (12), ausgestattet ist.

17. Vorrichtung nach einem der Ansprüche 8 bis 16, **dadurch gekennzeichnet, dass** die Welle (9) am Rand des flanschartigen Bereichs (6, 7), vorzugsweise in einem dort ausgebildeten Lagerbereich (21), gelagert und gehalten ist.

18. Vorrichtung nach Anspruch 17, **dadurch gekennzeichnet, dass** der Lagerbereich (21) durch das Gehäuse (1) nach außen gekapselt ist.

19. Vorrichtung nach Anspruch 18, **dadurch gekennzeichnet, dass** der Lagerbereich (21) in einer beidseitigen Erweiterung des Gehäuses (1) liegt.

20. Vorrichtung nach einem der Ansprüche 1 bis 19, **dadurch gekennzeichnet, dass** als Werkzeug Messer (11) mit vorzugsweise beidseitigen oder umlaufenden Schneiden vorgesehen sind.

21. Vorrichtung nach Anspruch 20, **dadurch gekennzeichnet, dass** die Messer (11) symmetrisch oder asymmetrisch um die Welle (9) herum angeordnet sind.

22. Vorrichtung nach Anspruch 20 oder 21, **dadurch gekennzeichnet, dass** die Messer (11) im Wesentlichen orthogonal von der Welle (9) abragen.

23. Vorrichtung nach einem der Ansprüche 20 bis 22, **dadurch gekennzeichnet, dass** die Messer (11) derart dimensioniert und angeordnet sind, dass sie mit nur geringem Abstand zu der Innenwandung (20) des Arbeitsraums (16) mit der Welle (9) drehen.

24. Vorrichtung nach einem der Ansprüche 1 bis 19, **dadurch gekennzeichnet, dass** als Werkzeug Schneidräder (15) vorgesehen sind.

25. Vorrichtung nach Anspruch 24, **dadurch gekennzeichnet, dass** die Schneidräder (15) symmetrisch oder asymmetrisch, zentrisch oder exzentrisch an der Welle (9) bzw. um die Welle (9) herum angeordnet sind.

26. Vorrichtung nach Anspruch 24 oder 25, **dadurch gekennzeichnet, dass** die Schneidräder (15) derart dimensioniert und angeordnet sind, dass sie mit nur geringem Abstand zu der Innenwandung (20) des Arbeitsraums (16) laufen.

27. Vorrichtung nach Anspruch 24 oder 25, **dadurch gekennzeichnet, dass** die Schneidräder (15) derart dimensioniert und angeordnet sind, dass sie auf der Innenwandung (20) des Arbeitsraumes (16) laufen.

28. Vorrichtung nach einem der Ansprüche 24 bis 27, **dadurch gekennzeichnet, dass** im Bereich zwischen den Gehäusehälften (2 oder 3) ein den Arbeitsraum (16) teilender Boden (17) ausgebildet ist, durch den die Schneidräder (15), vorzugsweise in Schlitzen (18), drehen.

29. Vorrichtung nach Anspruch 28, **dadurch gekennzeichnet, dass** der Boden (17) einer der beiden Gehäusehälften (2 oder 3) zugeordnet ist und eine Aufnahme für die Welle (9) umfasst.

30. Vorrichtung nach Anspruch 28 oder 29, **dadurch gekennzeichnet, dass** der Boden (17) die Welle (9) zu einer der Gehäusehälften (2, 3) hin überdeckt.

31. Vorrichtung nach einem der Ansprüche 24 bis 27, **dadurch gekennzeichnet, dass** die Schneidräder (15) pendelnd an der Welle (9) angelenkt sind und dass sich die Schneidräder (15) unter dem Einfluss der beim Drehen der Welle (9) auftretenden Zentrifugalkräfte zur Innenwandung (20) hin bewegen.

32. Vorrichtung nach Anspruch 31, **dadurch gekennzeichnet, dass** die Schneidräder (15) beim Drehen auf bzw. an der Innenwandung (20) des Arbeitsraums (16) laufen.

33. Vorrichtung nach einem der Ansprüche 1 bis 32, **dadurch gekennzeichnet, dass** die Werkzeuge Drähte, Drahtschlaufen (22) oder dergleichen im Sinne eines Schneebesens umfassen.

34. Vorrichtung nach Anspruch 33, **dadurch gekennzeichnet, dass** sich die Drähte, Drahtschlaufen (22) oder dergleichen entlang des Umfangs der Welle (9) von dieser weg erstrecken.

35. Vorrichtung nach Anspruch 33 oder 34, **dadurch gekennzeichnet, dass** die Drähte, Drahtschlaufen (22) oder dergleichen vorzugsweise kunststoffbeschichtete Metalldrähte sind.

36. Vorrichtung nach einem der Ansprüche 1 bis 35, **dadurch gekennzeichnet, dass** eine Abstreifeinrichtung zum Abstreifen bzw. Lösen des bearbeiteten Guts von der Innenwandung (20) des Arbeitsraums (16) vorgesehen ist.

37. Vorrichtung nach Anspruch 36, **dadurch gekennzeichnet, dass** die Abstreifeinrichtung der Welle (9) zugeordnet ist und dass sich bei drehender Welle (9) Abstreifer entlang der Innenwandung (20) des Arbeitsraumes (16) bewegen.

38. Vorrichtung nach Anspruch 36 oder 37, **dadurch gekennzeichnet, dass** die Abstreifer als mit der Welle (9) verbundene, vorzugsweise elastische Schleifbügel ausgeführt sind.

39. Vorrichtung nach einem der Ansprüche 19 bis 37, **dadurch gekennzeichnet, dass** das Werk eine Kombination unterschiedlicher Werkzeuge umfasst.

40. Vorrichtung nach einem der Ansprüche 1 bis 39, **dadurch gekennzeichnet, dass** der einen - unteren - Gehäusehälfte (3) ein integraler oder befestigter Sockel (4) zum Positionieren auf einer ebenen Unterlage zugeordnet ist.

41. Vorrichtung nach Anspruch 40, **dadurch gekennzeichnet, dass** der anderen - oberen - Gehäusehälfte (2) das Werk zugeordnet ist.

42. Vorrichtung nach einem der Ansprüche 1 bis 41, **dadurch gekennzeichnet, dass** die obere Gehäusehälfte (2) Sichtfenster (5) zum Einblick in den Arbeitsraum aufweist.

43. Vorrichtung nach einem der Ansprüche 1 bis 41, **dadurch gekennzeichnet, dass** die obere Gehäusehälfte (2) aus einem zumindest weitgehend durchsichtigen Material, vorzugsweise aus durchsichtigem Kunststoff, hergestellt ist.

## Claims

1. Device for stirring, mixing and/or grinding food products, with a housing (1) which preferably comprises two housing parts (2, 3) and forms a working space (16), and with a mechanism which is arranged in the working space (16) and comprises a shaft (9) which is equipped with tools, wherein the mechanism can be actuated by rotation of the housing parts (2, 3) relative to each other and, as a result, the shaft (9) can be rotated about the longitudinal axis thereof, **characterized in that** the shaft (9) extends through the working space (16) substantially transversely with respect to the axis of rotation of the housing parts (2, 3).

2. Device according to Claim 1, **characterized in that** the housing (1) comprises two housing halves (2, 3) which can be rotated in relation to each other, and **in that** the shaft (9) extends through the working space (16) transversely with respect to the axis of rotation of the housing halves (2, 3) preferably in the contact region of the housing halves (2, 3).

3. Device according to Claim 1 or 2, **characterized in that** the shaft (9) extends diagonally through the working space (16).

4. Device according to Claim 3, **characterized in that** the shaft (9) extends through the working space (16) orthogonally with respect to the axis of rotation of the housing halves (2, 3).

5. Device according to one of Claims 1 to 4,
**characterized in that** the mechanism and therefore the shaft (9) are driven in such a manner that, when the housing halves (2, 3) rotate, the shaft (g) moves both about its axis of rotation and about the axis of rotation of the housing halves (2, 3).

6. Device according to one of Claims 1 to 5,
**characterized in that** the housing halves (2, 3) are of approximately semi-spherical design.

7. Device according to Claim 6, **characterized in that** the working space (16) is of approximately spherical design.

8. Device according to one of Claims 1 to 7,
**characterized in that** the housing halves (2, 3) come into mutual contact via a flange-like region (6, 7).

9. Device according to Claim 8, **characterized in that** the flange-like region (6 or 7) of the one housing half (2 or 3) engages in the flange-like region (6 or 7) of the other housing half (2 or 3), or **in that** the two flange-like regions (6 and 7) at least partly engage over each other.

10. Device according to Claim 8 or 9, **characterized in that** the flange-like region (6 or 7) of the one housing half (2 or 3) has a protruding sliding ring (13), and the flange-like region (6 or 7) of the other housing half (2 or 3) has a set-back step (14) with a sliding surface for the sliding ring (13).

11. Device according to Claim 10, **characterized in that** the sliding ring (13) for the shaft (9) is interrupted around its diameter.

12. Device according to one of Claims 8 to 11,
**characterized in that** the flange-like region (6 or 7) of the one housing half (2 or 3) comprises an actuating member as part of the mechanism assigned to the other housing half (2 or 3).

13. Device according to Claim 12, **characterized in that** the actuating member is designed as a toothed ring (8).

14. Device according to Claim 13, **characterized in that** the other housing half (2 or 3), which encompasses the mechanism, bears, in the flange-like region (6 or 7), the shaft (9) which extends diagonally and meshes with the toothed ring (8) by means of at least one gearwheel (10) preferably on the end side.

15. Device according to Claim 14, **characterized in that** the shaft (9) has a gearwheel (10) on both sides, preferably on the end sides, for driving the shaft on both sides.

16. Device according to one of Claims 8 to 15,
**characterized in that** the shaft (9) is equipped, at least at one end of the shaft, with a preferably circular guide, preferably in the form of a guide disc (12) on the end side.

17. Device according to one of Claims 8 to 16,
**characterized in that** the shaft (9) is mounted and held on the edge of the flange-like region (6, 7), preferably in a bearing region (21) formed there.

18. Device according to Claim 17, **characterized in that** the bearing region (21) is encapsulated to the outside by the housing (1).

19. Device according to Claim 18, **characterized in that** the bearing region (21) lies in a widened portion on both sides of the housing (1).

20. Device according to one of Claims 1 to 19,
**characterized in that** blades (11) with cutting edges preferably on both sides or with peripheral cutting edges are provided as the tool.

21. Device according to Claim 20, **characterized in that** the blades (11) are arranged symmetrically or asymmetrically around the shaft (9).

22. Device according to Claim 20 or 21, **characterized in that** the blades (11) protrude substantially orthogonally from the shaft (9).

23. Device according to one of Claims 20 to 22,
**characterized in that** the blades (11) are dimensioned and arranged in such a manner that they rotate with the shaft (9) at only a small distance from the inner wall (20) of the working space (16).

24. Device according to one of Claims 1 to 19,
**characterized in that** cutting wheels (15) are provided as the tool.

25. Device according to Claim 24, **characterized in that** the cutting wheels (15) are arranged symmetrically or asymmetrically, centrally or eccentrically on the shaft (9) or around the shaft (9).

26. Device according to Claim 24 or 25, **characterized in that** the cutting wheels (15) are dimensioned and arranged in such a manner that they run at only a small distance from the inner wall (20) of the working space (16).

27. Device according to Claim 24 or 25, **characterized in that** the cutting wheels (15) are dimensioned and arranged in such a manner that they run on the inner wall (20) of the working space (16).

28. Device according to one of Claims 24 to 27,
**characterized in that** a base (17) which divides the working space (16) and through which the cutting wheels (15) rotate, preferably in slots (18), is formed in the region between the housing halves (2 and 3).

29. Device according to Claim 28, **characterized in that** the base (17) is assigned to one of the two housing halves (2 or 3) and comprises a receptacle for the shaft (9).

30. Device according to Claim 28 or 29, **characterized in that** the base (17) covers the shaft (9) towards one of the housing halves (2, 3).

31. Device according to one of Claims 24 to 27,
**characterized in that** the cutting wheels (15) are coupled to the shaft (9) in an oscillating manner, and **in that** the cutting wheels (15) move towards the inner wall (20) under the influence of the centrifugal forces occurring during the rotation of the shaft (9).

32. Device according to Claim 31, **characterized in that** the cutting wheels (15), as they rotate, run on or at the inner wall (20) of the working space (16).

33. Device according to one of Claims 1 to 32,
**characterized in that** the tools comprise wires, wire loops (22) or the like in the sense of an egg-whisk.

34. Device according to Claim 33, **characterized in that** the wires, wire loops (22) or the like extend away from the shaft (9) along the circumference thereof.

35. Device according to Claim 33 or 34, **characterized in that** the wires, wire loops (22) or the like are preferably plastic-coated metal wires.

36. Device according to one of Claims 1 to 35,
**characterized in that** a scraping means for scraping or detaching the worked product from the inner wall (20) of the working space (16) is provided.

37. Device according to Claim 36, **characterized in that** the scraping means is assigned to the shaft (9), and **in that**, when the shaft (9) rotates, scrapers move along the inner wall (20) of the working space (16).

38. Device according to Claim 36 or 37, **characterized in that** the scrapers are designed as preferably elastic abrasive bows which are connected to the shaft (9).

39. Device according to one of Claims 19 to 37,
**characterized in that** the mechanism comprises a combination of different tools.

40. Device according to one of Claims 1 to 39,
**characterized in that** the one - lower - housing half (3) is assigned an integral or attached pedestal (4) for positioning on a flat underlying surface.

41. Device according to Claim 40, **characterized in that** the other - upper - housing half (2) is assigned the mechanism.

42. Device according to one of Claims 1 to 41,
**characterized in that** the upper housing half (2) has viewing windows (5) for looking into the working space.

43. Device according to one of Claims 1 to 41,
**characterized in that** the upper housing half (2) is produced from an at least substantially transparent material, preferably from transparent plastic.

## Revendications

1. Dispositif pour agiter, mélanger et/ou broyer des aliments, comprenant un boîtier (1) comprenant de préférence deux parties de boîtier (2, 3), formant une chambre de travail (16), et un mécanisme disposé dans la chambre de travail (16), qui comprend un arbre (9) muni d'outils, le mécanisme pouvant être actionné par un mouvement de rotation des parties de boîtier (2, 3) l'une par rapport à l'autre et l'arbre (9) pouvant ainsi tourner autour de son axe longitudinal,
**caractérisé en ce que** l'arbre (9) s'étend essentiellement transversalement à l'axe de rotation des parties de boîtier (2, 3) à travers la chambre de travail (16).

2. Dispositif selon la revendication 1, **caractérisé en ce que** le boîtier (1) comprend deux moitiés de boîtier (2, 3) pouvant tourner l'une par rapport à l'autre et **en ce que** l'arbre (9) s'étend à travers la chambre de travail (16) de préférence dans la région de contact des parties de boîtier (2, 3) transversalement à l'axe de rotation des moitiés de boîtier (2, 3).

3. Dispositif selon la revendication 1 ou 2,
**caractérisé en ce que** l'arbre (9) s'étend en diagonale à travers la chambre de travail (16).

4. Dispositif selon la revendication 3, **caractérisé en ce que** l'arbre (9) s'étend perpendiculairement à l'axe de rotation des moitiés de boîtier (2, 3) à travers la chambre de travail (16).

5. Dispositif selon l'une quelconque des revendications 1 à 4, **caractérisé en ce que** le mécanisme et l'arbre (9) sont entraînés de telle sorte que l'arbre (9) se déplace lors de la rotation des moitiés de boîtier (2, 3) à la fois autour de son axe de rotation et autour de l'axe de rotation des moitiés de boîtier (2, 3).

6. Dispositif selon l'une quelconque des revendications 1 à 5, **caractérisé en ce que** les moitiés de boîtier (2, 3) sont réalisées approximativement sous forme hémisphérique.

7. Dispositif selon la revendication 6, **caractérisé en ce que** la chambre de travail (16) est réalisée approximativement sous forme sphérique.

8. Dispositif selon l'une quelconque des revendications 1 à 7, **caractérisé en ce que** les moitiés de boîtier (2, 3) viennent en appui mutuel par le biais d'une région en forme de bride (6, 7).

9. Dispositif selon la revendication 8, **caractérisé en ce que** la région en forme de bride (6 ou 7) de l'une des moitiés de boîtier (2 ou 3) vient en prise dans la région en forme de bride (6 ou 7) de l'autre moitié de boîtier (2 ou 3) ou **en ce que** les deux régions en forme de bride (6 ou 7) viennent au moins en partie en prise l'une sur l'autre.

10. Dispositif selon la revendication 8 ou 9,
**caractérisé en ce que** la région en forme de bride (6 ou 7) de l'une des moitiés de boîtier (2 ou 3) présente une bague de glissement saillante (13) et la région en forme de bride (6 ou 7) de l'autre moitié de boîtier (2 ou 3) présente un gradin en retrait (14) avec une surface de glissement pour la bague de glissement (13).

11. Dispositif selon la revendication 10, **caractérisé en ce que** la bague de glissement (13) pour l'arbre (9) est interrompue autour de son diamètre.

12. Dispositif selon l'une quelconque des revendications 8 à 11, **caractérisé en ce que** la région en forme de bride (6 ou 7) de l'une des moitiés de boîtier (2 ou 3) comprend un organe d'actionnement faisant partie du mécanisme associé à l'autre moitié de boîtier (2 ou 3).

13. Dispositif selon la revendication 12, **caractérisé en ce que** l'organe d'actionnement est réalisé sous la forme d'une couronne dentée (8).

14. Dispositif selon la revendication 13, **caractérisé en ce que** l'autre moitié de boîtier (2 ou 3) comprenant le mécanisme, dans la région en forme de bride (6 ou 7), porte l'arbre (9) s'étendant en diagonale, qui s'engrène avec la couronne dentée (8) par au moins une roue dentée (10) du côté de son extrémité.

15. Dispositif selon la revendication 14, **caractérisé en ce que** l'arbre (9) présente des deux côtés, de préférence du côté de ses extrémités, une roue dentée (10) pour l'entraînement des deux côtés.

16. Dispositif selon l'une quelconque des revendications 8 à 15, **caractérisé en ce que** l'arbre (9) est muni au moins à une extrémité d'arbre d'un guide de préférence de forme circulaire, de préférence en forme de disque de guidage du côté de l'extrémité (12).

17. Dispositif selon l'une quelconque des revendications 8 à 16, **caractérisé en ce que** l'arbre (9) est monté et maintenu sur le bord de la région en forme de bride (6 ou 7), de préférence dans une région de palier (21) qui y est réalisée.

18. Dispositif selon la revendication 17, **caractérisé en ce que** la région de palier (21) est encapsulée vers l'extérieur par le boîtier (1).

19. Dispositif selon la revendication 18, **caractérisé en ce que** la région de palier (21) se situe dans un élargissement du boîtier (1) des deux côtés.

20. Dispositif selon l'une quelconque des revendications 1 à 19, **caractérisé en ce que** l'on prévoit comme outil des couteaux (11) avec des lames de coupe de préférence des deux côtés, ou périphériques.

21. Dispositif selon la revendication 20, **caractérisé en ce que** les couteaux (11) sont disposés symétriquement ou asymétriquement autour de l'arbre (9).

22. Dispositif selon la revendication 20 ou 21,
**caractérisé en ce que** les couteaux (11) font saillie essentiellement perpendiculairement depuis l'arbre (9).

23. Dispositif selon l'une quelconque des revendications 20 à 22, **caractérisé en ce que** les couteaux (11) sont dimensionnés et disposés de telle sorte qu'ils tournent avec l'arbre (9) à seulement une faible distance de la paroi interne (20) de la chambre de travail (16).

24. Dispositif selon l'une quelconque des revendications 1 à 19, **caractérisé en ce que** l'on prévoit comme outil des roues de coupe (15).

25. Dispositif selon la revendication 24, **caractérisé en ce que** les roues de coupe (15) sont disposées symétriquement ou asymétriquement, de manière centrée ou excentrée, sur l'arbre (9) ou autour de l'arbre (9).

26. Dispositif selon la revendication 24 ou 25,
**caractérisé en ce que** les roues de coupe (15) sont dimensionnées et disposées de telle sorte qu'elles tournent à seulement une faible distance de la paroi interne (20) de la chambre de travail (16).

27. Dispositif selon la revendication 24 ou 25,
**caractérisé en ce que** les roues de coupe (15) sont dimensionnées et disposées de telle sorte qu'elles tournent sur la paroi interne (20) de la chambre de travail (16).

28. Dispositif selon l'une quelconque des revendications 24 à 27, **caractérisé en ce que** dans la région entre les moitiés de boîtier (2 ou 3) est réalisé un fond (17) divisant la chambre de travail (16), à travers lequel tournent les roues de coupe (15), de préférence dans des fentes (18).

29. Dispositif selon la revendication 28, **caractérisé en ce que** le fond (17) est associé à l'une des deux moitiés de boîtier (2 ou 3) et comprend un logement pour l'arbre (9).

30. Dispositif selon la revendication 28 ou 29,
**caractérisé en ce que** le fond (17) recouvre l'arbre (9) vers l'une des moitiés de boîtier (2, 3).

31. Dispositif selon l'une quelconque des revendications 24 à 27, **caractérisé en ce que** les roues de coupe (15) sont articulées de manière pendulaire à l'arbre (9), et **en ce que** les roues de coupe (15) se déplacent sous l'influence des forces centrifuges se produisant lors de la rotation de l'arbre (9) en direction de la paroi interne (20).

32. Dispositif selon la revendication 31, **caractérisé en ce que** les roues de coupe (15) tournent lors de la rotation sur ou contre la paroi interne (20) de la chambre de travail (16).

33. Dispositif selon l'une quelconque des revendications 1 à 32, **caractérisé en ce que** les outils comprennent des fils métalliques, des boucles en fil métallique (22) ou similaires à un fouet de cuisine.

34. Dispositif selon la revendication 33, **caractérisé en ce que** les fils métalliques, les boucles en fil métallique (22) ou similaires s'étendent le long de la périphérie de l'arbre (9) à l'écart de celui-ci.

35. Dispositif selon la revendication 33 ou 34,
**caractérisé en ce que** les fils métalliques, les boucles en fil métallique (22) ou similaires sont de préférence des fils métalliques gainés de plastique.

36. Dispositif selon l'une quelconque des revendications 1 à 35, **caractérisé en ce que** l'on prévoit un dispositif de raclage pour racler ou détacher le produit traité de la paroi interne (20) de la chambre de travail (16).

37. Dispositif selon la revendication 36, **caractérisé en ce que** le dispositif de raclage est associé à l'arbre (9) et **en ce que** les racles se déplacent le long de la paroi interne (20) de la chambre de travail (16) lorsque l'arbre (9) tourne.

38. Dispositif selon la revendication 36 ou 37,
**caractérisé en ce que** les racles sont réalisées sous forme d'arceaux en boucle connectés à l'arbre (9), de préférence élastiques.

39. Dispositif selon l'une quelconque des revendications 19 à 37, **caractérisé en ce que** le mécanisme comprend une combinaison de différents outils.

40. Dispositif selon l'une quelconque des revendications 1 à 39, **caractérisé en ce que** l'une des moitiés - inférieure - de boîtier (3) est associée à un socle intégral ou fixe (4) pour le positionnement sur un support plan.

41. Dispositif selon la revendication 40, **caractérisé en ce que** l'autre des moitiés - supérieure - de boîtier (2) est associée au mécanisme.

42. Dispositif selon l'une quelconque des revendications 1 à 41, **caractérisé en ce que** la moitié de boîtier supérieure (2) présente des fenêtres de vue (5) pour inspecter la chambre de travail.

43. Dispositif selon l'une quelconque des revendications 1 à 41, **caractérisé en ce que** la moitié de boîtier supérieure (2) se compose d'un matériau au moins essentiellement transparent, de préférence de plastique transparent.
